# EUROPÄISCHE PATENTANMELDUNG

(11) **EP 0 919 470 A1**
(43) Veröffentlichungstag der Anmeldung: **02.06.1999**
(21) Anmeldenummer: 98120383.9
(22) Anmeldetag: 28.10.1998
(51) Int. Cl.: B65B 35/38, B65B 35/18, B65G 47/91

(54) **Verfahren und Vorrichtung zum Handhaben von Folien-Weichpackungen**

(30) Priorität: 28.11.1997 DE 19752896
(71) Anmelder: Focke & Co. (GmbH & Co.), 27283 Verden (DE)
(72) Erfinder: Focke, Heinz, 27283 Verden (DE); Prahm, Andreas, 27283 Verden (DE); Klcso-Himstedt, Johann, 28844 Weyhe-Lahausen (DE)
(74) Vertreter: Bolte, Erich, Dipl.-Ing.

(57) **Zusammenfassung**

Verfahren und Vorrichtung zum Handhaben, nämlich Transportieren und Einführen von Folien-Weichpackungen (10) in einen Faltkarton (12) mit einem Hubkopf (17), der eine Packungsgruppe (13) an deren Oberseite durch Ansaugen erfaßt. Der Hubkopf (17) ist Teil eines Hubförderers (16) und über eine Saugleitung (28) mit einem Vakuumsauggebläse (31) verbunden, das bei hoher Förderleistung eine geringe Saugwirkung erzeugt, derart, daß die Packungsgruppe (13) keilförmig, also nach unten konvergierend, verformt und so in den offenen Faltkarton (12) eingesetzt wird.

## Beschreibung

Die Erfindung betrifft ein Verfahren zum Handhaben, insbesondere zum Transportieren von Folien-Weichpackungen für Zellstofferzeugnisse und ähnliche verformbare, weiche Produkte, wobei die Folien-Weichpackungen durch einen Saugkopf einer Fördervorrichtung an deren Oberseite erfaßt und transportiert sowie vorzugsweise in einen oben offenen Behälter eingeführt werden. Weiterhin betrifft die Erfindung eine Vorrichtung für die Handhabung derartiger Weichpackungen.

Bei den zu handhabenden Packungen handelt es sich um solche, die einen weichen, verformbarem Inhalt aufweisen und außen von einer dünnen Folie umgeben sind. Vorrangig geht es um die Handhabung von Folien-Weichpackungen für Zellstofferzeugnisse, wie Damenbinden, Windeln, Papiertaschentücher. Es geht darum, diese Weichpackungen rationell und zuverlässig in einen oben offenen Transportbehälter, nämlich einen Faltkarton, einzuführen. Dabei soll gewährleistet sein, daß die Weichpackungen aus verpackungstechnischen Gründen, aber auch zur optimalen Nutzung der Faltkartons unter leichtem Zusammendrücken bzw. unter Reduzierung des Volumens in dem Karton positioniert sind.

Aufgrund des vorgegebenen Volumens der entspannten, nicht unter Druck stehenden Weichpackungen ist die Einführung in einen kleineren Faltkarton problematisch. Ein mechanisches Zusammendrücken der Weichpackungen ist deshalb erforderlich, jedoch mit zusätzlichem Aufwand verbunden.

Der Erfindung liegt die Aufgabe zugrunde, die Handhabung von Folien-Weichpackungen, insbesondere das Einführen in einen offenen Behälter bzw. Karton zu verbessern, derart, daß auch das Einführen bei reduziertem Volumen der Weichpackungen ohne mechanischen Aufwand erforderlich ist.

Zur Lösung dieser Aufgabe ist das erfindungsgemäße Verfahren zum Handhaben der Weichpackungen dadurch gekennzeichnet, daß Weichpackungen von dem Saugkopf an deren Oberseite erfaßt und Unterdruck bei großer Fördermenge an Saugluft und verhältnismäßig geringem Unterdruck erzeugt wird, derart, daß die Weichpackungen in eine nach unten konvergierende, konische Querschnittsform verformt werden.

Überraschenderweise erhalten die Weichpackungen eine sich nach unten bzw. zu der vom Saugkopf abliegenden Seite hin konvergierende, trapezförmige Gestalt, wenn an einer (oberen) Seitenfläche durch einen Saugkopf mit flächiger Absaugung Unterdruck angelegt wird. Die nach unten konvergierende Gestalt der Weichpackungen wird während des Transports aufrechterhalten durch fortgesetztes Absaugen. Die Weichpackungen werden in dieser Form in den Faltkarton eingeführt. Nach dem Entlüften und freigeben der Weichpackungen dehnen sich diese wieder aus unter Einnahme der Ursprungsform, soweit innerhalb des Faltkartons möglich.

Der Effekt der Verformung der Weichpackungen wird verbessert bzw. ermöglicht, wenn mehrere Weichpackungen nebeneinander als Gruppe formiert von dem Saugkopf erfaßt werden. Dabei wird für die Erzielung des überraschenden Verformungseffekts zunächst Luft aus spaltförmigen Hohlräumen zwischen benachbarten Weichpackungen abgesaugt. Dadurch werden diese in einem vom Saugkopf entferntliegenden Bereich zusammengedrückt und erhalten die trapezförmige bzw. konvergierende Gestalt.

Weiterhin ist von Bedeutung, daß eine flächige Saugplatte des Saugkopfes durch Abstandhalter bzw. Vorsprünge im Randbereich der Saugplatte auf Abstand von der Oberseite der Weichpackungen gehalten wird. Vom Rand entferntliegende Bereiche der Weichpackungen werden bei Beginn des Ansaugens gegen die Saugplatte verformt, wodurch die beschriebene, konvergierende Formgebung der Weichpackungen eingeleitet, unterstützt und aufrechterhalten wird.

Die erfindungsgemäße Vorrichtung ist vorzugsweise ein Transportroboter, der mindestens einen Saugkopf mit einer Saugplatte zum Erfassen von vorzugsweise mehreren Weichpackungen aufweist. Am äußeren Rand der Saugplatte ist ringsherumlaufend ein Stützrand gebildet, der auf der Oberseite der Weichpackungen aufliegt. Abmessungen des Saugkopfes bzw. der Saugplatte sind demnach erfindungsgemäß stets etwas kleiner als die gesamte anzusaugende Fläche bzw. Oberseite der Weichpackungen.

Der Saugkopf ist erfindungsgemäß an ein Vakuumsauggebläse angeschlossen, welches ein hohes Fördervolumen bei verhältnismäßig geringem Unterdruck aufweist.

Weitere Einzelheiten des erfindungsgemäßen Verfahrens und der Vorrichtung werden nachfolgend anhand der Zeichnungen näher erläutert. Es zeigt:
- Fig. 1: eine Vorrichtung zum Einführen von Weichpackungen in Kartons in Queransicht,

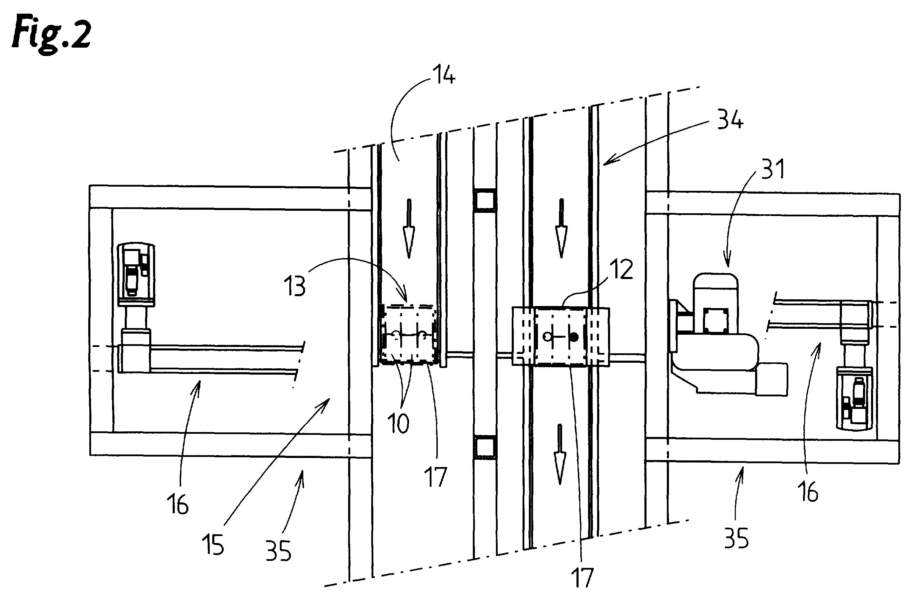

- Fig. 2: einen Teil der Vorrichtung gemäß Fig. 1 im Grundriß,

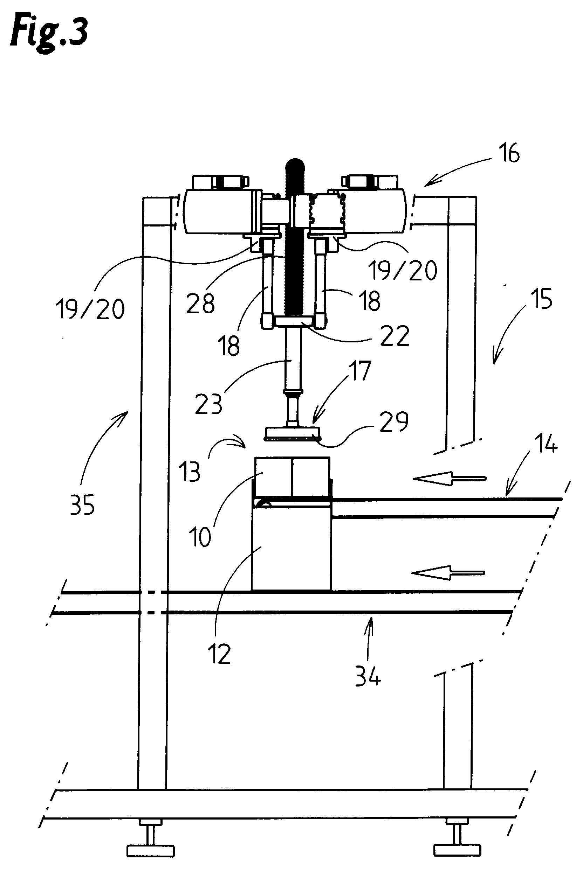

- Fig. 3: die Vorrichtung gemaß Fig. 1 und Fig. 2 in Seitenansicht,
- Fig. 4: eine Einzelheit der Vorrichtung, nämlich einen Hubkopf beim Einführen von Weichpackungen in einen Karton, teilweise im Schnitt, bei vergrößertem Maßstab,
- Fig. 5: eine nochmals vergrößerte Darstellung des Hubkopfes gemäß Fig. 4.

Bei dem in den Zeichnungen dargestellten Beispiel geht es um die Handhabung von Packungen 10, nämlich Folien-Weichpackungen. Es handelt sich dabei um einen weichen, verformbaren und zusammendrückbaren Packungsinhalt, insbesondere um Zellstofferzeugnisse, wie Damenbinden, Windeln, Papiertaschentüchern. Diese sind ringsherum von einer dünnen Folien 11 umgeben.

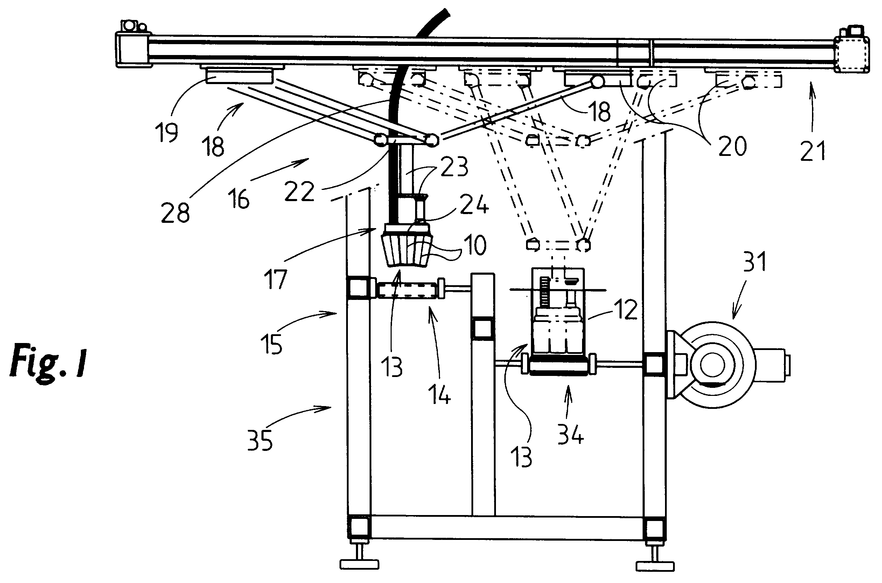

Die Packungen 10 sollen in einen Versandbehälter eingeführt werden, im vorliegenden Falle in einen oben offenen Faltkarton 12. Die Packungen 10 werden als Packungsgruppe 13 zugeführt und in den Faltkarton 12 eingegeben, wobei mehrere Packungsgruppen 13 den kompletten Inhalt des Faltkartons 12 bilden können. Bei dem gezeigten Beispiel besteht die Packungsgruppe 13 aus zwei Reihen mit je drei nebeneinanderliegenden länglichen Packungen 10. Diese sind so bemessen, daß sie innerhalb des Kartons 12 eine Lage von Packungen 10 bilden, wobei gemäß Fig. 1 zwei Lagen aus je einer Packungsgruppe 13 übereinander in den Faltkarton 12 eingeführt werden können.

Die Packungsgruppe 13 wird auf einem Packungsförderer 14, nämlich einem Bandförderer, zugeführt. Im Bereich einer Verpackstation 15 werden die einzelnen Packungsgruppen 13 von einem Hubförderer 16 erfaßt, vom Packungsförderer 14 abgenommen und in einer in Querrichtung versetzten Position in den oben offenen Faltkarton 12 eingeführt. Der Hubförderer 16 ist so ausgebildet, daß ein Hubkopf 17 in vertikaler Richtung sowie in einer sich quer zum Packungsförderer 14 erstreckenden Ebene bewegbar ist. Der Hubkopf 17 ist an einem Gestänge 18 angebracht, welches mit Schlitten 19, 20 an Horizontalförderern 21 hin- und herbewegbar sind. In Aufbau und Arbeitsweise entspricht dieser Hubförderer 16 der Ausführung gemäß DE 196 30 376.1.

An einer in jeder Position horizontalen Tragtraverse 22 ist über eine aufrechte Halterung 23 der Hubkopf 17 befestigt. Dieser ist als Saugkopf ausgebildet, der die Packungen 10 bzw. die Packungsgruppe 13 durch Ansaugen erfaßt und hält. Der Hubkopf 17 weist zu diesem Zweck eine Saugplatte 24 auf, an die die Packungen 10 bzw. die Packungsgruppe 13 ansaugbar ist. Die Saugplatte 24 ist vollflächig luftdurchlässig aufgrund von Saugbohrungen 25. An der den Packungen 10 zugekehrten freien Seite ist ein elastischer, luftdurchlässiger Belag 26 an der Saugplatte 24 angebracht, insbesondere aus Moosgummi. Die Saugplatte 24 ist unterer Abschluß einer Saugkammer 27. In der Saugkammer 27 wird Unterdruck erzeugt durch Absaugen von Luft über eine mit der Saugkammer 27 verbundene Saugleitung 28, die als flexibler Schlauch ausgebildet ist.

Die ebene Anlage- bzw. Saugfläche des Hubkopfes 17 ist seitlich begrenzt durch einen vorspringenden bzw. vorstehenden Rand 29. Dieser ist von einem elastischen Stützprofil 30 umgeben. Der Rand 29 bzw. dessen Stützprofil 30 liegt bei der Aufnahme bzw. beim Halten einer Packungsgruppe 13 an der Oberseite der Packungsgruppe 13 an. Die Oberseite bzw. Oberfläche des zu erfassenden Gegenstands - hier der Packungsgruppe 13 - ist demnach größer als die wirksame Fläche des Hubkopfes 17 bzw. der Saugplatte 24. Dadurch ist gewährleistet, daß die Saugplatte 24 mit der vollen Fläche an der Oberseite der Packungsgruppe 13 anliegt. Außerdem wirkt der Rand 29 mit dem Stützprofil 30 als ringsherumlaufender Abstandhalter bzw. als randseitiges Stützorgan auf der Oberseite der Packungsgruppe 13.

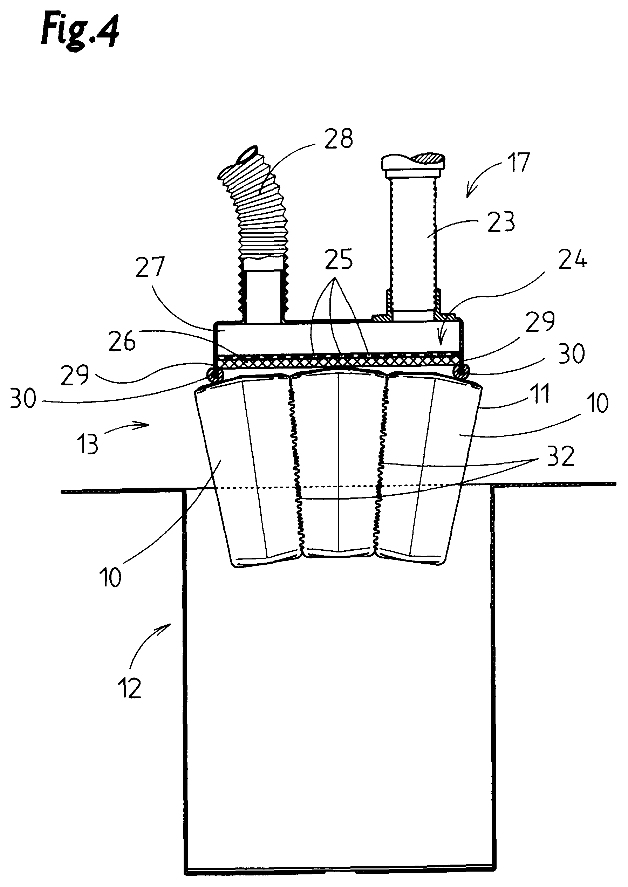

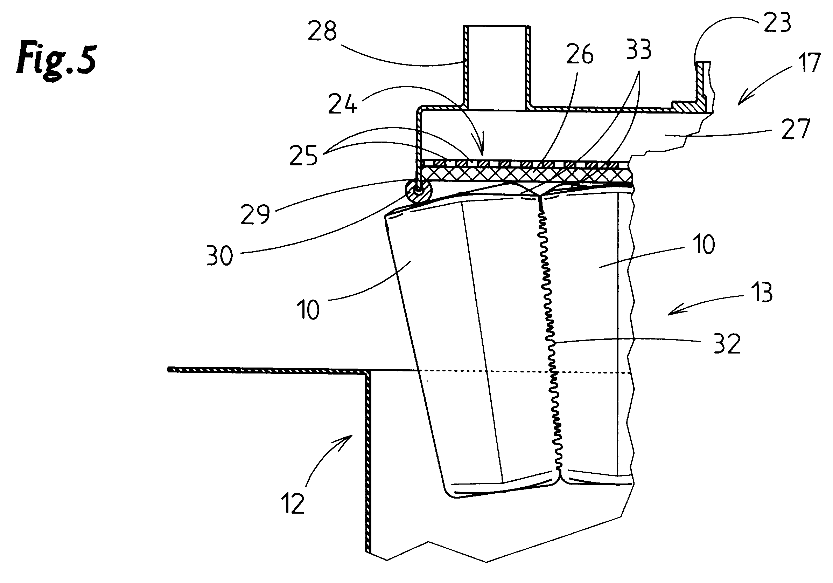

Ein besonderer, überraschender Effekt liegt darin, daß beim Erfassen der Packungen 10 bzw. der Packungsgruppe 13 ausschließlich an der Oberseite mittels Unterdruck die Packungsgruppe 13 in eine nach unten konvergierende Gestalt verformt wird (Fig. 4, Fig. 5). Die Packungsgruppe 13 erhält eine keilförmige Gestalt. Die Abmessungen sind dabei so gewählt, daß die in vorstehendem Sinne verformte Packungsgruppe 13 eine untere Querabmessung aufweist, die geringer ist als die entsprechende Abmessung des oben offenen Faltkartons 12. Die keilförmige Packungsgruppe 13 kann auf diese Weise zwängungsfrei und ohne manuellen Eingriff in den Faltkarton 12 eingeführt und in diesem abgesetzt werden.

Der Aufnahme der Packungsgruppe 13 durch den Hubkopf 17 liegen besondere Effekte zugrunde, die zu der Formveränderung der Packungsgruppe 13 führen. Wichtig ist, daß im Bereich des als Saugkopf ausgebildeten Hubkopfes 17 ein verhältnismäßig geringer Unterdruck mit einer hohen Absaugleistung an Luft erzeugt wird. Zu diesem Zweck ist der Hubkopf 17 bzw. die Saugkammer 27 über die Saugleitung 28 an ein Unterdruckaggregat angeschlossen, das eine hohe Förderleistung bei verhältnismäßig geringem Unterdruck aufweist. Besonders geeignet ist hierfür ein Vakuumsauggebläse 31. Dieses hat beispielsweise eine Leistung bzw. Fördervolumen von 250 m³/h. Der Unterdruck beträgt vorteilhafterweise 150 mbar.

Weiterhin ist von Bedeutung die Abstützung des Hubkopfes 17 auf der Oberseite der Packungsgruppe 13 durch den Rand 29 als Distanzorgan. Beim Ansaugen der Packungen 10 werden dadurch die innenliegenden Bereiche unter Verwölbung der Oberseite gegen die Saugplatte 24 gebogen. Diese Verformung führt zu einer entsprechenden Gegenreaktion im unteren Bereich der Packungsgruppe 13, so daß diese unter Querschnittsverjüngung zusammengedrückt wird. Voraussetzung hierfür ist ein verformbarer Inhalt der Packungen 10.

Weiterhin ist festgestellt worden, daß bei Beginn des Ansaugvorgangs Luft aus zwischen benachbarten Packungen 10 gebildeten Spalten abgesaugt wird. Dadurch werden aneinanderliegende Seitenwandungen 32 der Packungen 10 verkürzt, nämlich ziehharmonikaartig unter Bildung von Wellen zusammengezogen. Dies führt zu dem Effekt, daß die Packungen 10 eine keilförmige, nach unten konvergierende Gestalt erhalten. Weiterhin ist zu beobachten, daß im Bereich von Oberwandungen 33 Verwölbungen derselben entstehen, nämlich aufwärtsgerichtete, blasenartige Verformungen der Folie 11 (Fig. 5).

Nach dem Absetzen der Packungen 10 im Faltkarton 12 und dem Entlüften des Hubkopfes 17 nehmen die Packungen 10 die ursprüngliche, im wesentlichen quaderförmige Gestalt wieder an und füllen den betreffenden Bereich des Faltkartons 12 aus, zweckmäßigerweise unter Spannung.

Bei dem vorliegenden Ausführungsbeispiel werden die Faltkartons 12 auf einem Kartonförderer 34 bereitgehalten, der parallel zum Packungsförderer 14 verläuft. Durch den Kartonförderer 34 werden die leeren, oben offenen Faltkartons 12 der Verpackstation 15 zugeführt. In derselben Förderrichtung werden die gefüllten Faltkartons 12 abtransportiert. Packungsförderer 14 und Kartonförderer 34 laufen In versetzten Ebenen. Der Kartonförderer 34 befindet sich in einer Ebene unterhalb derjenigen des Packungsförderers 14. Dadurch wird ein kurzer Förderweg des Hubkopfes 17 gewährleistet. Die Oberseite des Faltkartons 12 befindet sich etwa auf Höhe des Packungsförderers 14.

Packungsförderer 14, Kartonförderer 34 einerseits und der Hubförderer 16 andererseits sind durch ein gemeinsames Traggestell 35 aus längs- und querverlaufenden Trägern sowie aufrechten Stützen miteinander verbunden.

### Bezugszeichenliste:

- 10: Packung
- 11: Folie
- 12: Faltkarton
- 13: Packungsgruppe
- 14: Packungsförderer
- 15: Verpackstation
- 16: Hubförderer
- 17: Hubkopf
- 18: Gestänge
- 19: Schlitten
- 20: Schlitten
- 21: Horizontalförderer
- 22: Tragtraverse
- 23: Halterung
- 24: Saugplatte
- 25: Saugbohrung
- 26: Belag
- 27: Saugkammer
- 28: Saugleitung
- 29: Rand
- 30: Stützprofil
- 31: Vakuumsauggebläse
- 32: Seitenwandung
- 33: Oberwandung
- 34: Kartonförderer
- 35: Traggestell

## Patentansprüche

1. Verfahren zum Handhaben, insbesondere Transportieren und Absetzen von Packungen (10), nämlich Folien-Weichpackungen für Zellstofferzeugnisse, wie Damenbinden, Windeln, Papiertaschentücher und dergleichen, wobei einzelne Packungen (10) oder eine Packungsgruppe (13) durch einen Hubkopf (17) mittels Saugluft erfaßbar sind, **dadurch gekennzeichnet**, daß die Packungen (10) bzw. die Packungsgruppe (13) bei verhältnismäßig geringem Unterdruck und hoher Förderleistung an Saugluft von dem Hubkopf (17) erfaßt werden, derart, daß die Packungen (10) bzw. die Packungsgruppe (13) eine keilförmige, zur freien Seite hin konvergierende Querschnittsform aufweisen.

2. Verfahren nach Anspruch 1, **dadurch gekennzeichnet**, daß die Packungen (10) bzw. die Packungsgruppe (13) bei Aufnahme durch den Hubkopf (17) mit Abstand von einer Saugplatte (24) gehalten werden, derart, daß die Oberseite der Packungen (10) bzw. Packungsgruppe (13) eine gewölbte Form erhält.

3. Verfahren nach Anspruch 1 oder 2, **dadurch gekennzeichnet**, daß bei Aufnahme einer Packungsgruppe (13) durch den Hubkopf (17) Luft aus dem Bereich zwischen benachbarten Packungen (10) aus spaltförmigen Zwischenräumen abgesaugt wird, derart, daß einander benachbarte Seitenwandungen (32) der Packungen (10) bzw. der Folien (11) derselben wellen- bzw. ziehharmonikaförmig zusammengezogen werden.

4. Vorrichtung zum Handhaben, insbesondere zum Transportieren und Absetzen von Packungen (10), nämlich Folien-Weichpackungen für Zellstofferzeugnisse und ähnliche Produkte, mittels Hubförderer (16), der einen verfahrbaren und mit Saugluft zum Erfassen der Packungen (10) beaufschlagten Hubkopf (17) aufweist, **dadurch gekennzeichnet**, daß die Packungen (10) bzw. die Packungsgruppe (13) an einer mit Saugluft beaufschlagten Fläche des Hubkopfes (17) anliegen, insbesondere an einer Saugplatte (24), derart, daß außenliegende Bereiche der Packungen (10) bzw. der Packungsgruppe (13) durch Abstandhalter, insbesondere einen Rand (29) der Saugplatte (24) auf Abstand gehalten sind.

5. Vorrichtung nach Anspruch 4, **dadurch gekennzeichnet**, daß der Hubkopf (17) mit einer verhältnismäßig geringen Saugkraft, jedoch mit hoher Förderleistung an Saugluft beaufschlagt ist, insbesondere durch Anschluß des Hubkopfes (17) an ein Vakuumsauggebläse (31).

6. Vorrichtung nach Anspruch 4 oder 5, **dadurch gekennzeichnet**, daß der Hubkopf (17) für die Packungen (10) bzw. Packungsgruppe (13) eine Saugplatte (24) mit Saugbohrungen (25) und einem elastischen Belag (26) auf der den Packungen (10) zugekehrten Seite aufweist, wobei die Saugplatte (24) einen ringsherumlaufenden Rand (29) als Stütz- bzw. Abstandsorgan aufweist und wobei ferner die Saugplatte (24) kleiner ist als die Oberseite der Packung (10) bzw. der Packungsgruppe (13), derart, daß der Rand (29) der Saugplatte (24) seitlich auf der Oberseite der Packung (10) bzw. Packungsgruppe (13) aufliegt.

7. Vorrichtung nach Anspruch 4 oder einem der weiteren Ansprüche, **dadurch gekennzeichnet**, daß der Hubkopf (17) an einem Hubförderer (16) angebracht ist, der eine hin- und hergehende Bewegung des Hubkopfes in einer Querebene sowie eine Auf- und Abwärtsbewegung desselben gewährleistet.
